# EUROPÄISCHE PATENTANMELDUNG

(11) **EP 2 063 357 A1**
(43) Veröffentlichungstag der Anmeldung: **27.05.2009**
(21) Anmeldenummer: 07022629.5
(22) Anmeldetag: 21.11.2007
(51) Int. Cl.: G06F 9/445

(54) **Transportabler Datenträger und Verfahren zum Übertragen von Konfigurationsdaten von einem externen Rechner auf einen Sensor**

(71) Anmelder: Pepperl + Fuchs GmbH, 68307 Mannheim (DE)
(72) Erfinder: Trebbels, Dennis, 67434 Neustadt a.d. Weinstrasse (DE); Höbel, Heiko, 67549 Worms (DE)
(74) Vertreter: Schiffer, Axel Martin

(57) **Zusammenfassung**

Die Erfindung betrifft einen transportablen Datenträger zum Übertragen von Konfigurationsdaten von einem externen Rechner auf einen Sensor, mit einem ersten Anschlussmittel zum Verbinden des Datenträgers mit dem externen Rechner, mit einem Schreib-Lese-Speicher zum Zwischenspeichern der Konfigurationsdaten, der mit dem ersten Anschlussmittel zusammenwirkt, wobei das erste Anschlussmittel dazu eingerichtet ist, die Konfigurationsdaten von dem externen Rechner in den Schreib-Lese-Speicher zu übertragen. Der transportable Datenträger ist dadurch gekennzeichnet, dass in dem Schreib-Lese-Speicher eine Konfigurationssoftware gespeichert ist, welche in einen Arbeitsspeicher des externen Rechners geladen werden kann, wenn der Datenträger an den externen Rechner angeschlossen ist, dass die Konfigurationssoftware mindestens zum automatischen oder interaktiven Zusammenstellen der Konfigurationsdaten für den Sensor durch einen Benutzer eingerichtet ist, dass zum Verbinden des Datenträgers mit dem Sensor ein zweites Anschlussmittel vorhanden ist, welches mit dem Schreib-Lese-Speicher zusammenwirkt und dazu eingerichtet ist, die Konfigurationsdaten von dem Schreib-Lese-Speicher in einen Speicher des Sensor zu übertragen, wenn der Datenträger mit dem Sensor verbunden ist, und dass zum Versorgen des Datenträgers eine netzunabhängige Spannungsversorgung vorhanden ist. Die Erfindung betrifft außerdem ein Verfahren zum Übertragen von Konfigurationsdaten von einem externen Rechner auf einen Sensor.

## Beschreibung

Die vorliegende Erfindung betrifft in einem ersten Aspekt einen transportablen Datenträger zum Übertragen von Konfigurationsdaten, insbesondere einer Firmware, von einem externen Rechner auf einen Sensor nach dem Oberbegriff des Anspruchs 1.

In einem zweiten Gesichtspunkt bezieht sich die Erfindung auf ein Verfahren zum Übertragen von Konfigurationsdaten von einem externen Rechner auf einen Sensor.

Ein gattungsgemäßer transportabler Datenträger, beispielsweise ein herkömmlicher USB-Stick, weist ein erstes Anschlussmittel zum Verbinden des Datenträgers mit dem externen Rechner und einen Schreib-Lese-Speicher zum Zwischenspeichern der Konfigurationsdaten auf, der mit dem ersten Anschlussmittel zusammenwirkt. Dabei ist das erste Anschlussmittel dazu eingerichtet, die Konfigurationsdaten von dem externen Rechner in den Schreib-Lese-Speicher zu übertragen.

Über den einfachen Nachweis einer Messgröße hinaus weisen Sensoren heute umfangreiche und variabel einzustellende Funktionalitäten auf. Hierzu ist in den Sensoren typischerweise eine Steuer- und Auswerteeinheit vorhanden, in der Programmabläufe niederlegt sind. Die dabei eingesetzte Spezialsoftware für die Endgeräte, welche bis zu einigen Megabyte groß sein kann, wird auch als Firmware bezeichnet. Eine solche Steuer- und Auswerteeinheit kann beispielsweise durch einen Mikrocontroller realisiert sein, wobei es sich um vollwertige Rechner mit CPU, Speicher und entsprechenden Schnittstellen handelt. Zum Bereitstellen der gewünschten Abläufe und Funktionen werden an diesen Mikrocontroller die entsprechenden Programmcodes übermittelt und außerdem werden in der Regel eine Vielzahl von Parametereinstellungen vorgenommen. Beispielsweise kann für einen Sensor eingestellt werden, auf welches Ausgangsspannungsintervall eine physikalische Messgröße abgebildet wird, es können zeitliche Abstände von Messungen festgelegt oder es kann bestimmt werden, ob Mittelwerte, Minima und/oder Maxima ermittelt und ausgegeben werden.

Schließlich werden in einer Firmware oder entsprechenden Parameter- und Konfigurationseinstellungen auch Details einer Kommunikation des Sensors mit einem Anschlussgerät festgelegt.

Grundsätzlich kann es sich bei dem Anschlussgerät um ein Relais, eine sonstige Schalt- oder Steuereinrichtung, ein Speise- oder Auswertegerät oder auch um ein Bussystem handeln. In den häufigsten Fällen wird der Sensor im Betriebsmodus mit einer speicherprogrammierbaren Steuerung als Anschlussgerät verbunden.

Um den Transfer der Programm- und Konfigurationsdaten, insbesondere also der Firmware, zu bewerkstelligen, müssen bisher die Sensoren typischerweise über eine serielle Schnittstelle oder einen Netzwerkanschluss mit einem PC verbunden werden. Hierbei ist ein Schnittstellenwandler erforderlich, der entweder von dem externen Rechner, also dem PC, mit elektrischer Energie versorgt wird oder aber ein eignes Netzteil benötigt. Dabei werden üblicherweise RS-232- oder RS-485-Schnittstellen verwendet. Der Datentransfer ist hier jedoch vergleichsweise langsam, so dass ein Update von größeren Software-Teilen umständlich ist. Der Schnittstellenwandler wird auch als Download-Gerät oder Programmiergerät bezeichnet.

Bei einem alternativen Verfahren werden dem Sensor die nötigen Daten mit Hilfe von Kurzschlusstaktungen übermittelt. Dazu wird der Sensor üblicherweise von dem Anschlussgerät getrennt, an welches er im normalen Messbetrieb angeschlossen ist, und das Programmiergerät wird an den nun freien Steckverbinder angeschlossen. Über definierte Kurzschlüsse zwischen den einzelnen Kontakten des Steckverbinders werden sodann die nötigen Konfigurationsdaten, insbesondere eine aktuelle Firmware-Version, auf den Sensor übertragen. Hierfür wird ebenfalls ein separates Programmiergerät benötigt und auch dieses Verfahren ist relativ langsam.

Bei Sensoren, die bereits am konkreten Einsatzort positioniert sind, ist es demgemäß aufwendig, Parameteränderungen durchzuführen oder eine aktuelle Version einer Firmware aufzuspielen. Insbesondere ist bisher immer ein externer Rechner nötig, auf dem beispielsweise eine graphische Benutzeroberfläche oder ein Prüfprogramm läuft.

Ein Näherungsschalter, bei welchem über einen elektrischen Anschluss sowohl Daten als auch elektrische Energie übertragen werden, ist in DE 41 23 828 C2 beschrieben.

Die US-2005/0083741 A1 und US-7,165,109 B2 betreffen die Funktionalität von USB-Komponenten. In US-7,165,109 B2 ist ein Ablauf beschrieben, wo eine an eine USB-Schnittstelle eines Rechners angeschlossene Komponente diesen Rechner veranlasst, sich über das Internet eine geeignete Treiber-Software für die Komponente herunterzuladen.

Eine **Aufgabe** der Erfindung ist es, eine Vorrichtung und ein Verfahren bereitzustellen, durch welche der Transfer von Konfigurationsdaten von einem externen Rechner auf einen Sensor vereinfacht wird.

Diese Aufgabe wird in einem ersten Gesichtspunkt der Erfindung durch den transportablen Datenträger mit den Merkmalen des Anspruchs 1 gelöst.

In einem zweiten Gesichtspunkt wird die Aufgabe durch das Verfahren mit den Merkmalen des Anspruchs 15 gelöst.

Bevorzugte Ausgestaltungen des erfindungsgemäßen transportablen Datenträgers und vorteilhafte Varianten des erfindungsgemäßen Verfahrens sind Gegenstand der abhängigen Ansprüche und sind außerdem in der Beschreibung, insbesondere im Zusammenhang mit der Figur, beschrieben.

Der transportable Datenträger der oben genannten Art ist erfindungsgemäß dadurch weitergebildet, dass in dem Schreib-Lese-Speicher eine Konfigurationssoftware gespeichert ist, welche in einen Arbeitsspeicher des externen Rechners geladen werden kann, wenn der Datenträger an den externen Rechner angeschlossen ist, dass die Konfigurationssoftware mindestens zum automatischen oder interaktiven Zusammenstellen der Konfigurationsdaten für den Sensor durch einen Benutzer eingerichtet ist, dass zum Verbinden des Datenträgers mit dem Sensor ein zweites Anschlussmittel vorhanden ist, welches mit dem Schreib-Lese-Speicher zusammenwirkt und dazu eingerichtet ist, die Konfigurationsdaten von dem Schreib-Lese-Speicher in einen Speicher des Sensor zu übertragen, wenn der Datenträger mit dem Sensor verbunden ist, und dass zum Versorgen des Datenträgers eine netzunabhängige Spannungsversorgung vorhanden ist.

Bei dem erfindungsgemäßen Verfahren wird ein transportabler Datenträger über ein erstes Anschlussmittel mit dem externen Rechner verbunden, anschließend wird eine in einem Schreib-Lese-Speicher des Datenträgers gespeicherte Konfigurationssoftware in einen Arbeitsspeicher des Rechners geladen, mit Hilfe der Konfigurationssoftware werden sodann Konfigurationsdaten automatisch oder interaktiv von einem Benutzer zusammengestellt und in dem Schreib-Lese-Speicher des Datenträgers abgespeichert. Weiterhin wird der Datenträger über ein zweites Anschlussmittel mit dem Sensor verbunden und die Konfigurationsdaten werden von dem Datenträger über das zweite Anschlussmittel auf den Sensor übertragen.

Als ein Kerngedanke der Erfindung kann angesehen werden, zum Übertragen der Konfigurationsdaten auf eine Verbindung des Sensors zu einem externen Rechner über ein Programmierungsgerät zu verzichten und stattdessen einen transportablen Datenträger einzusetzen.

Insbesondere soll es sich bei dem transportablen Datenträger um einen manuell transportablen Datenträger handeln, also ein Gerät, welches bequem von einem Benutzer an den jeweiligen Einsatzort mitgenommen werden kann.

Als weiterer Kerngedanke der Erfindung kann erachtet werden, den transportablen Datenträger mit einem speziellen zweiten Anschlussmittel zu versehen, welches so gestaltet ist, dass der Datenträger über das zweite Anschlussmittel mit dem Sensor verbunden und die notwendigen Konfigurationsdaten von dem Schreib-Lese-Speicher des Datenträgers an den Sensor übertragen werden können.

Auf der Erkenntnis, dass heute verfügbare Mikrocontroller oder Speicherbausteine hinreichend große Speicherbereiche aufweisen, so dass dort auch eine Konfigurationssoftware für den Sensor abgelegt werden kann, beruht der weitere Grundgedanke der Erfindung, den Datenträger so zu gestalten, dass die notwendige Software zum Zusammenstellen der Konfigurationsdaten für den Sensor in dem Datenträger selbst enthalten ist.

Als ein wesentlicher Vorteil der Erfindung kann angesehen werden, dass insbesondere in komplexen industriellen Umgebungen Firmware-Updates oder Parameteraktualisierungen besonders rasch durchgeführt werden können, da man im Wesentlichen nur den transportablen Datenträger mit dem Sensor verbinden muss.

Ein wesentlicher Vorteil der Erfindung ist außerdem, dass keine CDs, DVDs oder ähnliche Datenträger, auf welchen die nötige Parametrier- oder Konfigurierungssoftware abgelegt ist, mehr mitgeliefert werden müssen. Schließlich kann bei der Erfindung die Notwendigkeit für den Anwender entfallen, auf dem externen Rechner Software zu installieren. Vorteilhaft ist außerdem, dass bei der Erfindung auf vorhandene Hardware und betriebssystemunabhängige Software zurückgegriffen werden kann.

Mit der Erfindung wird demgemäß der Download einer Gerätefirmware insgesamt deutlich vereinfacht.

Bei den Sensoren kann es sich grundsätzlich um jede Art von Sensoren für die Automatisierungstechnik zum Nachweis einer physikalischen Messgröße oder zum Nachweis von Gegenständen oder Objekten handeln. Besonders vorteilhaft kann die vorliegende Erfindung für Sensoren im industriellen Bereich, etwa induktive, kapazitive oder optische Sensoren, Temperatur- oder Drucksensoren, eingesetzt werden. Zum Beispiel kann es sich auch um Identifizierungssensoren, etwa RFID-Leseköpfe, handeln und die Erfindung kann ebenso eingesetzt werden, um an ein Steuer- und Auswertegerät für eine Vielzahl solcher RFID-Leseköpfe, oder an die RFID-Leseköpfe selbst die notwendigen Konfigurationsdaten zu übertragen.

Unter dem Begriff des Konfigurierens soll für die vorliegende Beschreibung jede softwaremäßige Veränderung oder Einstellung eines Sensors verstanden werden. Dies umfasst insbesondere jegliche Übertragung von Programm- oder Binärcode an den Sensor sowie das Aufspielen einer Firmware und das Ändern und/oder Hinzufügen von Parametern. Entsprechend soll der Begriff der Konfigurationsdaten verstanden werden, so dass hierunter jegliche softwaremäßige Daten zu verstehen sein sollen, die an den Sensor oder den Datenträger übermittelt werden.

Der Konfigurationsmodus beinhaltet jedenfalls einen Konfigurationsvorgang, der grundsätzlich auch während es Messbetriebs erfolgen kann. Konfigurationsmodus und Betriebsmodus können sich demgemäß zeitlich überlappen, also gleichzeitig eingenommen werden.

Unter einem Anschlussmittel sollen für die vorliegende Beschreibung insbesondere diejenigen Komponenten verstanden werden, welche notwendig sind, um zwischen dem Datenträger und dem Sensor bzw. dem Steuer- und Auswertegerät eine schnittstellenmäßige Verbindung, also eine Datenverbindung, zu etablieren. Darüber hinaus kann diese schnittstellenmäßige Verbindung auch in der Lage sein, elektrische Energie zum Versorgen des transportablen Datenträgers zu übertragen. Grundsätzlich kann dies auch drahtlos, beispielsweise über Funk, erfolgen. Prinzipiell sind auch Kombinationen möglich, so dass beispielsweise die Energie drahtgebunden und die Daten per Funk übertragen werden. Bei zweckmäßigen Ausgestaltungen des erfindungsgemäßen Datenträgers sind jedoch geeignete Steckverbindungen an dem Datenträger vorgesehen, über welche sowohl Daten als auch elektrische Energie geleitet werden kann.

Hierzu weisen die ersten Anschlussmittel und die zweiten Anschlussmittel jeweils Hardwaremittel, insbesondere Steckverbinder, sowie eine Software auf.

Der Datentransfer zwischen dem transportablen Datenträger und dem Sensor kann grundsätzlich auf Grundlage jedes beliebigen Protokolls erfolgen. Besonders bevorzugt werden die Schnittstellen und Protokolle benutzt, mit welchen der Sensor oder das Steuer- und Auswertegerät ohnehin arbeiten. Zweckmäßig erfolgt deshalb ein Datentransfer zwischen dem Datenträger und dem Sensor oder dem Steuer- und Auswertegerät über eine serielle Schnittstelle, insbesondere eine RS-232- oder eine RS-485-Schnittstelle.

Bevorzugt kann auch ein USB-Protokoll eingesetzt werden. Die Software des ersten Anschlussmittels kann dann zum, insbesondere automatischen, Bereitstellen einer USB-Slave-Funktionalität eingerichtet sein, wenn der Datenträger an den externen Rechner angeschlossen ist. Entsprechend kann die Software des zweiten Anschlussmittels zum, insbesondere automatischen, Bereitstellen einer USB-Host-Funktionalität eingerichtet ist, wenn der Datenträger an den Sensor angeschlossen ist. Es kann dann auf verbreitete Standards zurückgegriffen werden. Der Datenträger wird von dem externen Rechner dann beispielsweise als Massenspeicher erkannt und behandelt.

Bei der Datenübertragung zwischen dem Datenträger und dem externen Rechner wirkt also der Datenträger als USB-Slave und der externe Rechner als USB-Host. Entsprechend wirkt bei der Datenübertragung zwischen dem Datenträger und dem Sensor der Datenträger als USB-Host und der Sensor als USB-Slave.

Bei einer vorteilhaften Ausgestaltung weist das zweite Anschlussmittel des Datenträgers demgemäß einen Steckeranschluss auf, welcher mit einem Steckverbinder des Sensors oder des Steuer- und Auswertegeräts zusammenpasst.

Besonders bevorzugt werden als Steckverbinder für Sensoren in der Automatisierungstechnik dichtende Rundsteckverbinder eingesetzt. Hierbei kann es sich beispielsweise um 4- oder 5-polige Steckverbinder, insbesondere um V1- oder V3-Steckverbinder, handeln.

Die Sensoren oder das Steuer- und Auswertegerät als solche können so vollständig unverändert bleiben, da bereits vorhandene Steckverbindungen genutzt werden können.

Vorteilhaft ist weiterhin, wenn auch für den Datentransfer zwischen dem externen Rechner und dem transportablen Datenträger auf Standardschnittstellen des Rechners zurückgegriffen wird. Besonders bevorzugt erfolgt deshalb ein Datentransfer zwischen dem erfindungsgemäßen Datenträger und dem externen Rechner über eine USB- oder eine Fire-Wire-Schnittstelle. Hierbei kann es sich auch um Varianten und Fortentwicklungen von USB-Schnittstellen handeln. Entsprechend weist das erste Anschlussmittel des Datenträgers zweckmäßig einen USB-Steckverbinder auf.

Grundsätzlich kann es sich bei dem ersten und dem zweiten Anschlussmittel um separate physikalische Einheiten handeln. Bei einer besonders bevorzugten Ausgestaltung des erfindungsgemäßen Datenträgers sind aber das erste Anschlussmittel und das zweite Anschlussmittel durch ein- und denselben Anschluss, insbesondere durch ein- und denselben Steckverbinder, gebildet. Bevorzugt handelt es sich hierbei um einen USB-Steckverbinder.

In einem Hauptgesichtspunkt betrifft die Erfindung die Übertragung von Konfigurationsdaten von dem erfindungsgemäßen Datenträger auf einen Sensor. Grundsätzlich ist auch möglich, dass der Datenträger an ein Steuer- und Auswertegerät angeschlossen wird und dass die Konfigurationsdaten an das Steuer- und Auswertegerät selbst oder an Sensoren übertragen werden, welche an diesem Steuer- und Auswertegerät angeschlossen sind.

Damit der transportable Datenträger geeignet mit einem Sensor kommunizieren kann, ist außerdem von Vorteil, wenn eine elektronische Einrichtung vorhanden ist zum Identifizieren einer Schnittstelle an dem Sensor, wenn der Datenträger an dem Sensor angeschlossen ist. Zweckmäßigerweise sind dann außerdem geeignete Mittel vorhanden, damit der Datenträger zwischen mehreren Schnittstellenprotokollen, etwa RS-232, RS-485 und USB wechseln kann.

Bei einer weiteren bevorzugten Variante ist der Datenträger insgesamt als Schnittstellenadapter ausgebildet.

Um Konflikte, beispielsweise zwischen einem externen Rechner und einem Sensor, an welche ein als Schnittstellenwandler arbeitende Datenträger gleichzeitig angeschlossen ist, und Beschädigungen des externen Rechners oder des Sensors zu vermeiden, ist es von Vorteil, wenn der transportable Datenträger außerdem eine elektronische Einrichtung aufweist zum Feststellen, ob der Datenträger mit einem Rechner und/oder mit einem Sensor oder mit einem Steuer- und Auswertegerät verbunden ist. Diese elektronische Einrichtung kann sowohl an den fraglichen Anschlüssen anliegende Spannungspegel und ergänzend oder alternativ auch dort vorhandene Datensignale bei der Prüfung, an welches Gerät oder an welche Geräte der Datenträger angeschlossen ist, berücksichtigten.

Der Schutz gegen eine Beschädigung eines an dem Datenträger angeschlossenen Sensors, eines Steuer- und Auswertegeräts oder eines externen Rechners kann außerdem verbessert werden, wenn das erste Anschlussmittel und das zweite Anschlussmittel, insbesondere mit Hilfe von Optokopplern, galvanisch getrennt sind.

Bei einer weiteren bevorzugten Variante weist der transportable Datenträger optische Anzeigemittel, insbesondere Leuchtdioden, auf, um Funktionszustände des Datenträgers anzuzeigen. Beispielsweise kann eine gelbe Leuchtdiode vorhanden sein, welche, etwa durch Blinken, einen aktiven Download-Zustand anzeigt. Weiterhin kann eine Duo-Leuchtdiode grün leuchten, wenn eine geeignete Versorgungsspannung anliegt oder rot leuchten, wenn ein Fehler vorliegt.

Ein Datendownload kann für einen Nutzer sehr komfortabel gestaltet werden, wenn eine Übertragung der Konfigurationsdaten von einem externen Rechner auf den Datenträger automatisch erfolgt, nachdem der Datenträger mit dem externen Rechner verbunden wird und/oder wenn eine Übertragung der Konfigurationsdaten von dem Datenträger auf einen Sensor automatisch erfolgt, wenn der Datenträger mit dem Sensor oder mit dem Steuer- und Auswertegerät verbunden wird.

Der Datentransfer vom Rechner auf den Datenträger beziehungsweise vom Datenträger auf den Sensor kann jeweils auch nach einfacher Bestätigung durch einen Benutzer, also durch minimale Benutzerinteraktion, beispielsweise durch einfachen Tastendruck, gestartet werden.

Um sicherzustellen, dass das Steuer- und Auswertegerät oder der Sensor nach der Datenübertragung funktionstüchtig ist, können außerdem vor und/oder nach dem Übertragen der Konfigurationsdaten auf den Sensor oder das Steuer- und Auswertegerät Funktions-, Plausibilitäts- und/oder Konsistenztests des Sensors oder des Steuer- und Auswertegeräts durchgeführt werden.

Besonders bequem für einen Benutzer ist außerdem, wenn die Konfigurationssoftware nach Verbindung des Datenträgers mit dem externen Rechner automatisch oder nach Bestätigung durch einen Benutzer auf dem externen Rechner gestartet wird.

Sofern Einstellungen des externen Rechners ein völlig automatisches Starten der Konfigurationssoftware nicht zulassen, kann bevorzugt vorgesehen sein, dass zum Start der Konfigurationssoftware jedenfalls nur eine minimale Benutzerinteraktion, beispielsweise also nur ein einmaliges Bestätigen durch Drücken der ENTER-Taste, erforderlich ist.

Die Konfigurationssoftware kann auf dem erfindungsgemäßen Datenträger grundsätzlich als ausführbarer Code gespeichert sein. Um eine größere Unabhängigkeit von dem konkret eingesetzten externen Rechner zu erzielen, ist die Konfigurationssoftware besonders bevorzugt plattformunabhängig ausführbar. Beispielsweise kann die Konfigurationssoftware auch als interpretierbarer Code abgespeichert sein.

Es kann auch vorgesehen sein, dass der externe Rechner, nachdem der erfindungsgemäße Datenträger dort angeschlossen wurde, veranlasst wird, eine Netzwerkverbindung herzustellen und dass anschließend geprüft wird, ob die Programmdateien auf dem Datenträger den aktuellen Versionen entsprechen. Hierbei können aktuelle Versionen eines Benutzerhandbuchs oder der Programmdateien auf den Datenträger geladen werden.

Zur Realisierung der oben genannten Funktionalitäten weist der Datenträger bevorzugt einen oder mehrere Mikrocontroller, FPGAs, CPLDs, GALs oder andere programmierbare Logik-Komponenten, gegebenenfalls mit den notwendigen Speicherbausteinen, auf.

Wenn das Speichervolumen eines verwendeten Mikrocontrollers nicht ausreicht, können gegebenenfalls zusätzliche Speicherbausteine eingesetzt werden.

Zweckmäßig kann in dem Datenträger ein Bootloader vorhanden oder gespeichert sein, welcher eine nachträgliche Programmierung des Mikrocontrollers ermöglicht.

Ein besonderer Vorteil der Erfindung ist, dass als externer Rechner praktisch jede Art von Rechner eingesetzt werden kann. Beispielsweise können im Fertigungsprozess PCs verwendet und es können hierbei insbesondere kundenspezifische Parametrierungen sowie Funktionstests durchgeführt werden. Wenn eine Neukonfigurierung oder eine Eichung am Einsatzort notwendig sein sollte, werden bevorzugt Laptops, Handhelds oder Palmtops eingesetzt. Grundsätzlich kann auch ein Mobiltelefon hierfür verwendet werden.

Weiterhin ist bevorzugt, wenn der Speicher des Datenträgers einen schreibgeschützten Bereich aufweist. Beispielsweise kann hierin ein Benutzerhandbuch abgespeichert sein, welches bei Verbindung mit dem externen Rechner auf diesem gestartet und angesehen werden kann. Ein solches Benutzerhandbuch kann aktualisiert oder ergänzt werden, wobei aktuelle Versionen von dem externen Rechner über das Internet heruntergeladen und anschließend auf den Datenträger übertragen werden können.

Bei einer weiteren bevorzugten Variante des erfindungsgemäßen Datenträgers und des erfindungsgemäßen Verfahrens ist das erste Anschlussmittel und/oder das zweite Anschlussmittel dazu eingerichtet, über zwei Adern einer Datenleitung Konfigurationsdaten differenziell zwischen dem Datenträger und dem Rechner und/oder zwischen dem Datenträger und dem Sensor zu übertragen. Hierbei kann eine größere Störsicherheit und damit eine größere Geschwindigkeit erreicht werden.

Besonders bevorzugt wird dabei auf vorhandene Standardprotokolle zurückgegriffen. Die Daten können zwischen dem Datenträger und dem externen Rechner oder dem Sensor mit einer Bandbreite größer als 1 MBit/s übertragen werden. Vorteilhaft ist hierbei außerdem, dass kein weiterer Entwicklungsaufwand nötig ist.

Weitere Vorteile und Merkmale der vorliegenden Erfindung werden nachstehend mit Bezug auf die beigefügte Zeichnung erläutert. Hierin zeigt:

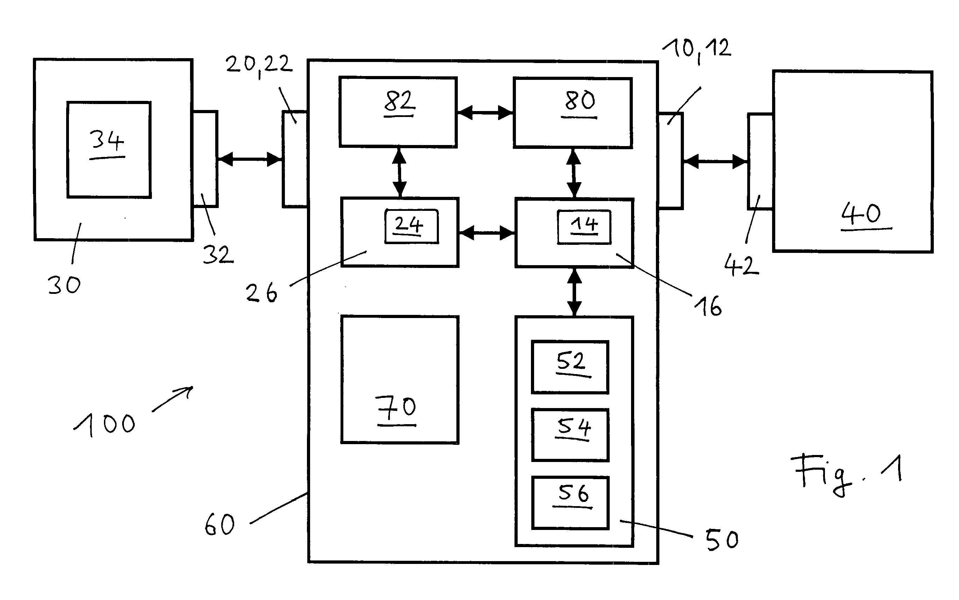

- Fig. 1:: in schematischer Darstellung ein Ausführungsbeispiel eines erfindungsgemäßen transportierbaren Datenträgers.

Der in Fig. 1 dargestellte erfindungsgemäße Datenträger 100 weist als wesentliche Bestandteile ein erstes Anschlussmittel 10, ein zweites Anschlussmittel 20, einen Schreib-Lese-Speicher 50 und eine netzunabhängige Stromversorgung 70 auf.

Das erste Anschlussmittel 10 beinhaltet einen Steckverbinder 12, beispielsweise einen USB-Stecker, sowie eine Software 14, die in einem Microcontroller 16 gespeichert ist. Mit einer Datenleitung können über das erste Anschlussmittel zwischen dem erfindungsgemäßen Datenträger 100 und einem USB-Stecker 42 eines externen Rechners 40 über ein USB-Protokoll Daten ausgetauscht werden. Das zweite Anschlussmittel umfasst einen Steckverbinder 22 sowie eine Software 24, die im gezeigten Beispiel in einem weiteren Microcontroller 26 gespeichert ist.

Der Steckverbinder 22 ist ein dichtender Rundsteckverbinder und passt mit einem entsprechenden Rundsteckverbinder 32 eines Sensors 30 zusammen, an den der Datenträger 100 zum erfindungsgemäßen Datenaustausch angeschlossen werden kann.

Die netzunabhängige Spannungsversorgung 70, bei der es sich insbesondere um einen Akkumulator oder Batterien handeln kann, ermöglicht ein unabhängiges Arbeiten mit dem erfindungsgemäßen Datenträger 100, insbesondere unmittelbar am Einsatzort des neu zu konfigurierenden Sensors 30. Insbesondere können auch Daten an Sensoren übertragen werden, die nur einen einzigen Steckverbinder aufweisen und demgemäß für die Dauer der Datenübertragung von ihrer normalen Spannungsversorgung getrennt werden müssen. Für die Dauer der Datenübertragung können demnach solche Sensoren über den erfindungsgemäßen Datenträger 100 mit elektrischer Energie versorgt werden.

Prinzipiell können auch Einrichtungen, bei denen die Handwärme oder Schüttelbewegungen in elektrische Energie umgesetzt werden, als netzunabhängige Spannungsversorgung dienen.

In dem Schreib-Lese-Speicher 50 ist erfindungsgemäß eine Konfigurationssoftware 56, bevorzugt in einer weitgehend betriebssystemunabhängigen Programmiersprache, abgelegt. Beispielsweise kann die Konfigurationssoftware als interpretierbarer Programmcode abgespeichert sein. Bevorzugt beinhaltet die Konfigurationssoftware 56 eine graphische Benutzeroberfläche und ist demgemäß leicht von einem Benutzer zu bedienen.

Weiterhin sind in dem Schreib-Lese-Speicher 50 eine Firmware 52 für den Sensor 30 und eine Parameterdatei 54 abgelegt.

Der erfindungsgemäße Datenträger 100 arbeitet wie folgt. Wenn der Datenträger 100 mit dem externen Rechner 40 verbunden wird, wird auf dem Rechner 40 die Konfigurationssoftware 56 entweder automatisch oder nach Bestätigung durch einen Benutzer gestartet. Der Benutzer kann sodann unter Einsatz der graphischen Benutzeroberfläche die letztendlich an den Sensor 30 zu übertragenden Konfigurationsdaten zusammenstellen.

Hierbei kann es sich sowohl um Programmdaten, beispielsweise ein aktuelle Firmware, als auch um Parametereinstellungen handeln. Bei der Datenübertragung wirkt der erfindungsgemäße Datenträger als USB-Slave, wobei diese Funktionalität durch die Software 14 im Microcontroller im Zusammenwirken mit dem Steckverbinder 12 realisiert wird. Der externe Rechner 40 wirkt hierbei als USB-Host.

Sodann wird der Datenträger 100 von dem Rechner 40 getrennt und an den Einsatzort zum Sensor 30 gebracht. Der Sensor 30 wird dann von seiner normalen Betriebsverbindung, beispielsweise von einem Anschlussgerät, getrennt und mit dem erfindungsgemäßen Datenträger 100 verbunden. Die zuvor vom Benutzer zusammengestellten oder automatisch auf den erfindungsgemäßen Datenträger 100 geladenen Konfigurationsdaten werden nun in einen Speicher 34 des Sensors 30 übertragen. Dies erfolgt wiederum bevorzugt automatisch, ohne dass, abgesehen vom Einstecken des Datenträgers 100 auf den Steckverbinder 32 des Sensors 30, weitere Aktivitäten des Benutzers notwendig sind.

Bei der Datenübertragung vom erfindungsgemäßen Datenträger 100 wirkt bevorzugt der Sensor 30 als USB-Slave und der erfindungsgemäße Datenträger 100 nun als USB-Host. Diese USB-Host-Funktionalität wird durch den Microcontroller 26 und die Software 24 zusammen mit dem Steckverbinder 22 verwirklicht.

Um zu erkennen, wo der erfindungsgemäße Datenträger 100 angeschlossen ist, ist eine elektronische Einrichtung 80 vorhanden, die beispielsweise an den Kontakten der Steckverbinder 12, 22 anliegende Pegel und/oder Datensignale auswerten kann.

Der Datenträger 100 ist in einem Gehäuse 60 untergebracht, dessen Größe im Wesentlichen durch die netzunabhängige Spannungsversorgung 70 bestimmt wird.

Die Funktionalität des Datenträgers 100 wird außerdem erhöht durch eine weitere elektronische Einrichtung 82, welche erkennen kann, an welche Art von Schnittstelle, beispielsweise USB- oder RS-232-Schnittstelle, der Steckverbinder 22 angeschlossen ist. Die elektronische Einrichtung 82 wirkt mit dem Microcontroller 26 zusammen, der sich an die entsprechend festgestellte Schnittstelle anpassen kann.

Im Stand der Technik sind Sensoren mit Kommunikationsschnittstellen bekannt, welche zum Programmieren dieser Sensoren mit Hilfe von kabelgebundenen Programmiergeräten genutzt werden. Diese Programmiergeräte fungieren als physikalische Pegelwandler und als Protokollumsetzer. Hierbei ist jedoch immer ein PC nötig, auf dem ein Programm, beispielsweise mit graphischer Benutzerschnittstelle oder Prüfprogramm, läuft. Ohne PC sind diese bekannten Programmiergeräte nicht nutzbar.

Mit der vorliegenden Erfindung wird ein neuartiger transportabler Datenträger bereitgestellt, der auch als eigenständiges, autarkes oder "Stand-Alone"-Programmiergerät angesehen werden kann. Dieser erfindungsgemäße Datenträger beinhaltet einen vergrößerten Speicher, in dem mehrere Programme, Firmware, Dateien und Parameter gespeichert werden können. Der Datenträger oder das Programmiergerät weist nach wie vor zwei Schnittstellen auf, insbesondere zwei USB-Schnittstellen. Eine der Schnittstellen dient zum Verbinden des Datenträgers mit dem Sensor und über die andere Schnittstelle kann der Datenträger mit einem PC verbunden werden. Die Schnittstellen werden hier auch als Anschlussmittel bezeichnet. Gegenüber dem PC kann sich das Programmiergerät als gewöhnlicher USB-Slave verhalten. Es ist somit möglich, von einem PC aus das Programmiergerät, also den Datenträger, selbst zu konfigurieren und beispielsweise eine neue Firmware oder Dateien zu übertragen und im Programmiergerät zu speichern. Nach Konfiguration des Programmiergeräts, also nach dem Zusammenstellen der Konfigurationsdaten für den Sensor, kann der Datenträger als eigenständiges Gerät fungieren und sich gegenüber einem angeschlossenen Sensor als USB-Host verhalten. Der Sensor arbeitet typischerweise als USB-Slave. Grundsätzlich können die Host-Slave-Beziehungen aber auch umgedreht werden. Insgesamt ist es auf diese Weise möglich, zahlreiche Sensoren ohne den Einsatz eines PC zu konfigurieren und/oder eine Konfigurierung zu ändern oder zu ergänzen. Dies ist insbesondere bei bereits eingebauten Sensoren sehr vorteilhaft.

Grundsätzlich lassen sich mit dem hier beschriebenen Datenträger auch vorhandene Schnittstellen nutzen. Die Variante, bei der sowohl über das erste als auch über das zweite Anschlussmittel in einem USB-Protokoll kommuniziert wird, ist eine besonders bevorzugte Ausführungsform.

Das Programmiergerät enthält in seinem Schreib-Lese-Speicher 50 ein Programm, beispielsweise eine Java-Datei, welche plattformunabhängig auf einem PC 40 ausgeführt werden kann. Dieses Programm stellt beispielsweise eine graphische Bedienoberfläche dar und ist auf jedem PC ausführbar, sobald das Programmiergerät über die USB-Verbindung an den PC angeschlossen wird.

Die dann getätigten Einstellungen werden beispielsweise in einer Datei gespeichert und das Programmiergerät kann nun von dem PC 40 getrennt werden. Wenn nun ein Sensor 30 an das Programmiergerät angeschlossen wird, können die gespeicherten Einstellungen übertragen werden. Aufgrund der vorbeschriebenen elektronischen Einrichtung 82 kann sich der erfindungsgemäße Datenträger außerdem an unterschiedliche Schnittstellen der Sensoren anpassen. Ein PC ist für diese Übertragung auf den Sensor 30 nicht mehr notwendig.

Ein weiterer Vorteil der Erfindung besteht darin, dass das eigentliche Programmiergerät, also der Datenträger 100, relativ klein und leicht ausfallen kann und auf diese Weise auch Sensoren im eingebauten Zustand konfiguriert werden können, da kein PC oder Laptop mehr notwendig ist.

Grundsätzlich ließe sich die hier beschriebene Funktionalität in einem einzelnen Sensor realisieren. Jedoch müsste dann das graphische Bedienprogramm in jedem einzelnen Sensor gespeichert werden und es würde entsprechend mehr Speicherplatz benötigt.

## Patentansprüche

1. Transportabler Datenträger zum Übertragen von Konfigurationsdaten, insbesondere einer Firmware, von einem externen Rechner auf einen Sensor, insbesondere zur Durchführung des Verfahrens nach einem der Ansprüche 15 bis 25,
mit einem ersten Anschlussmittel (10) zum Verbinden des Datenträgers (100) mit dem externen Rechner (40),
mit einem Schreib-Lese-Speicher (50) zum Zwischenspeichern der Konfigurationsdaten (52, 54), der mit dem ersten Anschlussmittel (10) zusammenwirkt, wobei das erste Anschlussmittel (10) dazu eingerichtet ist, die Konfigurationsdaten von dem externen Rechner (40) in den Schreib-Lese-Speicher (50) zu übertragen,
**dadurch gekennzeichnet,**
**dass** in dem Schreib-Lese-Speicher (50) eine Konfigurationssoftware (56) gespeichert ist, welche in einen Arbeitsspeicher des externen Rechners (40) geladen werden kann, wenn der Datenträger (100) an den externen Rechner (40) angeschlossen ist,
**dass** die Konfigurationssoftware (56) mindestens zum automatischen oder interaktiven Zusammenstellen der Konfigurationsdaten für den Sensor (30) durch einen Benutzer eingerichtet ist,
**dass** zum Verbinden des Datenträgers (100) mit dem Sensor (30) ein zweites Anschlussmittel (20) vorhanden ist, welches mit dem Schreib-Lese-Speicher (50) zusammenwirkt und dazu eingerichtet ist, die Konfigurationsdaten von dem Schreib-Lese-Speicher (50) in einen Speicher des Sensor (30) zu übertragen, wenn der Datenträger (100) mit dem Sensor (30) verbunden ist, und
**dass** zum Versorgen des Datenträgers (100) eine netzunabhängige Spannungsversorgung (70) vorhanden ist.

2. Sensor nach Anspruch 1,
**dadurch gekennzeichnet,**
**dass** die ersten Anschlussmittel (10) und die zweiten Anschlussmittel (20) jeweils Hardwaremittel, insbesondere Steckverbinder (12, 22), sowie eine Software (14, 24) aufweisen.

3. Sensor nach Anspruch 2,
**dadurch gekennzeichnet,**
**dass** die Software (14) des ersten Anschlussmittels (10) zum, insbesondere automatischen, Bereitstellen einer USB-Slave-Funktionalität eingerichtet ist, wenn der Datenträger (100) an den externen Rechner (40) angeschlossen ist.

4. Sensor nach Anspruch 2 oder 3,
**dadurch gekennzeichnet,**
**dass** die Software (24) des zweiten Anschlussmittels (20) zum, insbesondere automatischen, Bereitstellen einer USB-Host-Funktionalität eingerichtet ist, wenn der Datenträger (100) an den Sensor (30) angeschlossen ist.

5. Datenträger nach einem der Ansprüche 1 bis 4,
**dadurch gekennzeichnet,**
**dass** das erste Anschlussmittel (10) einen USB-Steckverbinder (12) aufweist.

6. Datenträger nach einem der Ansprüche 1 bis 5,
**dadurch gekennzeichnet,**
**dass** das zweite Anschlussmittel (20) einen, insbesondere 4- oder 5-poligen, dichtenden Rundsteckverbinder (22) aufweist.

7. Datenträger nach Anspruch 1 bis 6,
**dadurch gekennzeichnet,**
**dass** eine elektronische Einrichtung (80) vorhanden sind zum Feststellen, ob der Datenträger (100) mit dem Rechner (40) und/oder mit dem Sensor (30) verbunden ist.

8. Sensor nach Anspruch 7,
**dadurch gekennzeichnet,**
**dass** die elektronische Einrichtung (80) eine an mindestens einem Kontakt des ersten (10) oder des zweiten Anschlussmittels (20) anliegende Versorgungsspannung auswertet.

9. Sensor nach Anspruch 7 oder 8,
**dadurch gekennzeichnet,**
**dass** die elektronische Einrichtung (80) ein an mindestens einem Kontakt des ersten (10) oder des zweiten Anschlussmittels (20) anliegendes Datensignal auswertet.

10. Datenträger nach einem der Ansprüche 1 bis 9,
**dadurch gekennzeichnet,**
**dass** eine elektronische Einrichtung (82) vorhanden ist zum Identifizieren einer Schnittstelle an dem Sensor (30), wenn der Datenträger (100) an dem Sensor (30) angeschlossen ist.

11. Datenträger nach einem der Ansprüche 1 bis 10,
**dadurch gekennzeichnet,**
**dass** optische Anzeigemittel, insbesondere Leuchtdioden, vorhanden sind, um Funktionszustände des Datenträgers (100) anzuzeigen.

12. Datenträger nach einem der Ansprüche 1 bis 11,
welcher als Schnittstellenadapter ausgebildet ist.

13. Datenträger nach einem der Ansprüche 1 bis 12,
**dadurch gekennzeichnet,**
**dass** das erste Anschlussmittel (10) und das zweite Anschlussmittel (20 galvanisch getrennt sind.

14. Datenträger nach Anspruch 1 bis 13,
**dadurch gekennzeichnet,**
**dass** ein schreibgeschützter Speicherbereich vorhanden ist.

15. Verfahren zum Übertragen von Konfigurationsdaten, insbesondere einer Firmware, von einem externen Rechner auf einen Sensor,
bei dem ein transportabler Datenträger (100), insbesondere nach einem der Ansprüche 1 bis 14, über ein erstes Anschlussmittel (10) mit dem externen Rechner (40) verbunden wird,
bei dem anschließend eine in einem Schreib-Lese-Speicher (50) des Datenträgers (100) gespeicherte Konfigurationssoftware (56) in einen Arbeitsspeicher des Rechners (40) geladen wird,
bei dem anschließend mit Hilfe der Konfigurationssoftware (56) Konfigurationsdaten (52, 54) automatisch oder interaktiv von einem Benutzer zusammengestellt und in dem Schreib-Lese-Speicher (50) des Datenträgers (100) abgespeichert werden.
bei dem der Datenträger (100) über ein zweites Anschlussmittel (20) mit dem Sensor (30) verbunden wird, und
bei dem die Konfigurationsdaten von dem Datenträger (100) über das zweite Anschlussmittel (20) auf den Sensor (30) übertragen werden.

16. Verfahren nach Anspruch 15,
**dadurch gekennzeichnet,**
**dass** das ein Datentransfer zwischen dem Datenträger (100) und dem externen Rechner (40) und/oder zwischen dem Datenträger (100) und dem Sensor (30) über eine USB- oder eine Fire-Wire-Schnittstelle erfolgt.

17. Verfahren nach einem der Ansprüche 15 oder 16,
**dadurch gekennzeichnet,**
**dass** das ein Datentransfer zwischen dem Datenträger (100) und dem Sensor (30) über eine serielle Schnittstelle, insbesondere eine RS-232-Schnittstelle, erfolgt.

18. Verfahren nach einem der Ansprüche 15 bis 17,
**dadurch gekennzeichnet,**
**dass** bei der Datenübertragung zwischen dem Datenträger (100) und dem externen Rechner (40) der Datenträger (100) als USB-Slave und der externe Rechner (40) als USB-Host wirkt.

19. Verfahren nach einem der Ansprüche 15 bis 18,
**dadurch gekennzeichnet,**
**dass** bei der Datenübertragung zwischen dem Datenträger (100) und dem Sensor (30) der Datenträger (100) als USB-Host und der Sensor (30) als USB-Slave wirkt.

20. Verfahren nach einem der Ansprüche 15 bis 19,
**dadurch gekennzeichnet,**
der Sensor (30) während der Übertragung der Konfigurationsdaten von einer netzunabhängigen Spannungsversorgung (70) des Datenträgers (100) versorgt wird.

21. Verfahren nach einem der Ansprüche 15 bis 20,
**dadurch gekennzeichnet,**
**dass** die Konfigurationssoftware (56) nach Verbindung des Datenträgers (100) mit dem externen Rechner (40) automatisch oder nach Bestätigung durch einen Benutzer auf dem externen Rechner (40) gestartet wird.

22. Verfahren nach einem der Ansprüche 15 bis 21,
**dadurch gekennzeichnet,**
**dass** eine Übertragung der Konfigurationsdaten von dem externen Rechner (40) auf den Datenträger (100) automatisch erfolgt, nachdem der Datenträger (100) mit dem externen Rechner (40) verbunden wird und/oder
**dass** eine Übertragung der Konfigurationsdaten von dem Datenträger (100) auf einen Sensor (30) automatisch erfolgt, wenn der Datenträger (100) mit dem Sensor (30) verbunden wird.

23. Verfahren nach einem der Ansprüche 15 bis 22,
**dadurch gekennzeichnet,**
**dass** die Konfigurationssoftware (56) in dem Speicher (50) des Datenträgers (100) als ausführbares oder interpretierbares Programm gespeichert ist.

24. Verfahren nach einem der Ansprüche 15 bis 23,
**dadurch gekennzeichnet,**
**dass** die Konfigurationssoftware (56) den externen Rechner (40) veranlasst, eine Netzwerkverbindung zu einem Remote-Host aufzubauen und zu prüfen, ob aktuelle Programmversionen für die Konfigurationssoftware (56) und/oder eine Sensor-Firmware (52) vorliegen und
**dass** gegebenenfalls aktuelle Programmversionen vom Remote-Host heruntergeladen und in den Schreib-Lese-Speicher (50) des Datenträgers (100) übertragen werden.

25. Verfahren nach Anspruch 15 bis 24,
**dadurch gekennzeichnet,**
**dass** vor und/oder nach dem Übertragen der Konfigurationsdaten auf den Sensor (30) Funktions- und/oder Konsistenztests des Sensors (100) oder durchgeführt werden.
